# EUROPEAN PATENT SPECIFICATION

(11) **EP 2 823 345 B1**
(45) Date of publication and mention of the grant of the patent: **02.12.2020**
(21) Application number: 13707347.4
(22) Date of filing: 27.02.2013
(51) Int. Cl.: G02B 6/44

(54) **SPLICE ENCLOSURE WITH STORAGE TRAY**
SPLEISSGEHÄUSE MIT ÜBERLÄNGENSPEICHER
COFFRET D'ÉPISSURES AVEC CASSETTE DE LOVAGE

(30) Priority: 09.03.2012 US 201261609150 P
(43) Date of publication of application: 14.01.2015
(73) Proprietor: CommScope Connectivity Belgium BVBA, 3010 Kessel-Lo (BE)
(72) Inventor: CLAESSENS, Bart, Mattie, B-3500 Hasselt (BE); KEMPENEERS, Dirk, B-3200 Aarschot (BE); FOULON, Wouter, B-3000 Leuven (BE); COECKELBERGHS, Diana, B-3460 Bekkevoort (BE)
(74) Representative: Patentanwälte Bressel und Partner mbB
(86) International application number: PCT/EP2013/053873
(87) International publication number: WO 2013/131788

(56) References cited:
- EP-A1- 0 873 536
- EP-A1- 1 532 478
- US-A1- 2003 091 315
- US-A1- 2009 148 117
- US-A1- 2010 183 274
- US-B1- 6 192 180

## Description

### Technical Field

The present disclosure relates to a splice enclosure assembly and a method.

### Background

Telecommunications systems typically employ a network of telecommunications cables capable of transmitting large volumes of data and voice signals over relatively long distances. The telecommunications cables can include fiber optic cables, electrical cables, or combinations of electrical and fiber optic cables. A typical telecommunications network also includes a plurality of telecommunications enclosures integrated throughout the network of telecommunications cables. The telecommunications enclosures are adapted to house and protect telecommunications components such as splices, termination panels, power splitters, and wavelength division multiplexers.

It is often preferred for telecommunications enclosures to be re-enterable. The term "re-enterable" means that the telecommunications enclosures can be reopened to allow access to the telecommunications components housed therein without requiring the removal and destruction of the telecommunications enclosures. For example, certain telecommunications enclosures can include separate access panels that can be opened to access the interiors of the enclosures, and then closed to re-seal the enclosures. Other telecommunications enclosures take the form of elongated sleeves formed by wrap-around covers or half-shells having longitudinal edges that are joined by clamps or other retainers. Still other telecommunications enclosures include two half-pieces that are joined together through clamps, wedges or other structures. Telecommunications enclosures are typically sealed to inhibit the intrusion of moisture or other contaminants.

The US 6,192,180 B1 discloses a stack of splice trays for splicing optical ribbon fibers. Each of the splice trays has splice arrangement plates for fixing splices allowing for a high density of splices.

The EP 0 873 536 A1 discloses an enclosure having a plurality of pivoting trays. The bights of individual fibers are engaged with respective support trays or cassettes of the enclosure. For each customer, each fiber is cut and its cut ends spliced to respective fibers that run to a customer. The splices are stored with the respective storage tray.

The EP 1 532 478 A1 discloses a plurality of splice trays mounted with common pivot axes.

The US 2010/0183274 A1 discloses an enclosure holding a plurality of splice trays and a slack storage tray coupled to a platform. The slack storage tray has a pivot axis parallel to pivot axes of the splice trays.

The US 2009/0148117 A1 discloses a stack of trays that pivot about a common axis.

### Summary

The invention provides a splice closure assembly according to claim 1, further embodiments of the invention are defined by the dependent claims. Aspects of the disclosure are directed to an enclosure assembly including an enclosure; a plurality of splice trays disposed within the enclosure; and a loop storage tray disposed within the enclosure. The loop storage tray defines a round-about pathway for storing excess length of optical fibers and a pathway for a looped section of the optical fibers.

Aspects of the disclosure also are directed to a splice enclosure assembly including a base defining an interior and at least one cable port leading to the interior of the base; a tray manager disposed within the interior of the base; a plurality of splice trays pivotally coupled to the tray manager about parallel pivot axes; and a storage tray pivotally coupled to the tray manager about a storage pivot axis that is not parallel to the pivot axes of the splice trays. The storage tray defines a cable storage channel for cable slack storage.

Aspects of the disclosure also are directed to a storage tray including a body having a first side and a second side that extend between first and second ends; a first bend radius limiter and a second bend radius limiter disposed at the first side of the body; a hinge arrangement extending from the first end of the body; and a latching arrangement extending from a second end of the body. The first and second bend radius limiters cooperate to define a cable storage channel arrangement that includes an outer channel and a crossing channel.

Aspects of the disclosure also are directed to a method of splicing a first optical fiber of a first fiber optic cable to another optical fiber at a splice enclosure. The method includes disposing a section of the first fiber optic cable within the splice enclosure; pivoting a storage tray to an open position to provide access to a plurality of splice trays disposed in the splice enclosure; accessing one of the plurality of splice trays; breaking out at least one optical fiber from the first fiber optic cable and routing the at least one optical fiber to the accessed splice tray; pivoting the storage tray to a closed position that inhibits access to the splice trays; and storing any remaining optical fibers of the first fiber optic cable in a cable storage channel arrangement of the storage tray. Portions of the first fiber optic cable on either side of the section extend through a cable port. The section of the first fiber optic cable includes a stripped region of the first fiber optic cable.

A variety of additional aspects will be set forth in the description that follows. These aspects can relate to individual features and to combinations of features. It is to be understood that both the foregoing general description and the following detailed description are exemplary and explanatory only and are not restrictive of the embodiments disclosed herein.

### Brief Description of the Drawings

FIG. 1 shows a perspective view of an example splice enclosure assembly with a cover latched to a base in accordance with aspects of the disclosure;
FIG. 2 is an exploded view of the splice enclosure assembly of FIG. 1 including a splice tray assembly and a storage tray that fit between the base and cover in accordance with aspects of the disclosure;
FIG. 3 is an exploded view of the splice tray assembly of FIG. 2;
FIG. 4 is a top perspective view of the splice enclosure assembly of FIG. 1 with the cover removed to reveal the storage tray of FIG. 2;
FIG. 5 is a perspective view of the storage tray of FIG. 2 wherein a first side and a first end of the storage tray are visible;
FIG. 6 is a perspective view of the storage tray of FIG. 5 wherein a first side and a second end of the storage tray are visible;
FIG. 7 is a top plan view of the storage tray of FIG. 5;
FIG. 8 is a bottom plan view of the storage tray of FIG. 5;
FIG. 9 is a top perspective view of the enclosure assembly of FIG. 4 with the storage tray pivoted to an open position and the splice trays removed for ease in viewing;
FIG. 10 is a top perspective view of the enclosure assembly of FIG. 4 with the storage tray pivoted to an open position to reveal the splice trays;
FIG. 11 is a perspective view of the splice tray assembly and storage tray isolated from the splice enclosure;
FIG. 12 is a top perspective view of the enclosure assembly of FIG. 10 with some of the splice trays removed for ease in viewing optical fibers routed from a cable port to the storage tray;
FIG. 13 is a top perspective view of the enclosure assembly of FIG. 12 with the storage tray in the closed position so that the optical fibers disposed in the cable routing channels of the storage tray are visible; and
FIG. 14 is a rear perspective view of an example port assembly for use with the splice enclosure assembly.

### Detailed Description

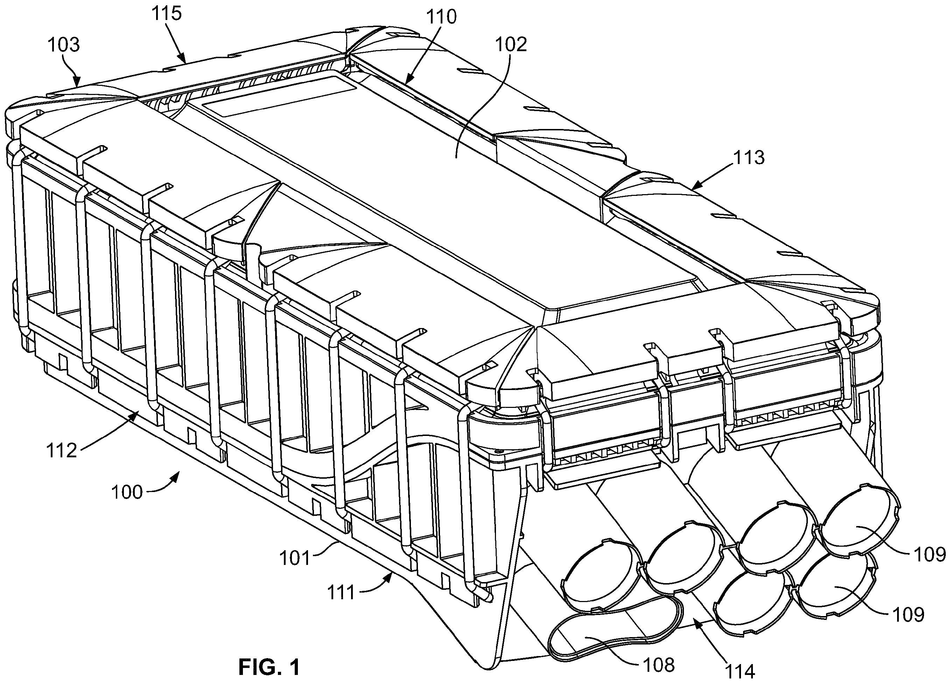

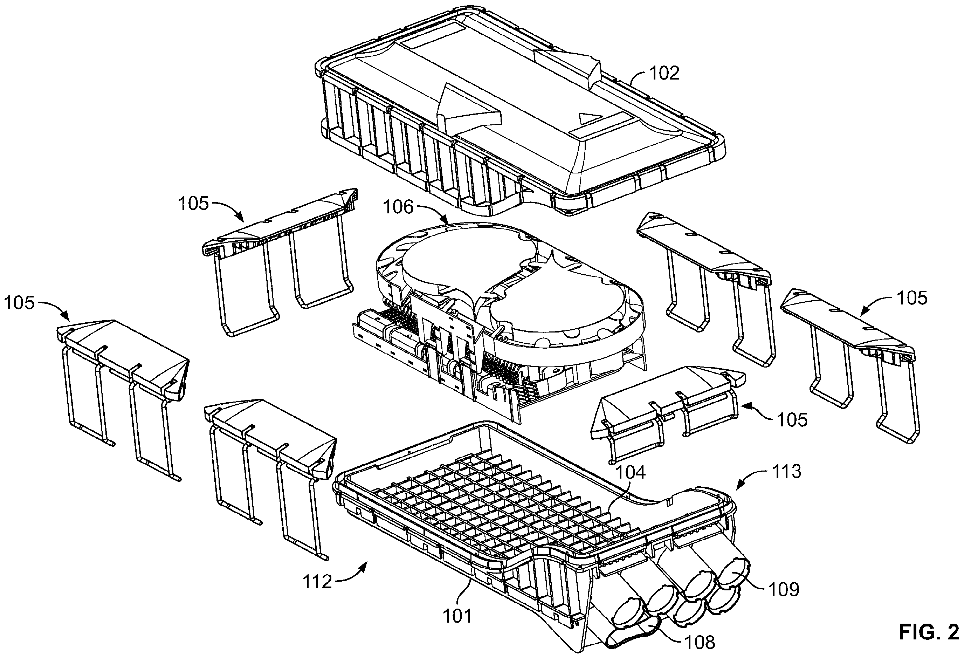

FIGS. 1 and 2 are perspective views of a splice enclosure assembly 100 including a base 101 and a cover 102 that cooperate to form an enclosure 103 that defines an interior 104. Latch arrangements 105 releasably secure the cover 102 in a closed position relative to the base 101. The latch arrangements 105 may be released to enable the cover 102 to be removed from the base 101. A gasket or sealing ring may be disposed between the base 101 and the cover 102 around the perimeter of the enclosure 103. The gasket inhibits dirt, water, or other contaminants from entering the enclosure 103 when the cover 102 is secured to the base 101 by the latches 105. A splice tray assembly 106 is mounted within the interior 104 of the enclosure 103. Various cable port assemblies may be disposed in cable ports 108, 109 defined by the enclosure 103 to enable optical fiber cables to be routed into and out of the enclosure 103.

As shown in FIG. 1, the enclosure 103 has a top 110, a bottom 111, a first side 112, a second side 113, a first end 114, and a second end 115. The cable ports 108, 109 are disposed at the first end 114 of the enclosure 103. The second end 115 of the enclosure 103 is generally solid (i.e., does not define cable ports). The base 101 forms the bottom 111 of the enclosure 103 and the cover 102 forms the top 110 of the enclosure 103. The base 101 forms the majority of the first end 114 of the enclosure 103 and the cover 102 forms the majority of the second end 115 of the enclosure 103. The base 101 and cover 102 cooperate to form the sides 112, 113 of the enclosure 103.

In some implementations, the cable ports 108, 109 are defined through the base 101. In other implementations, however, the cover 102 may define one or more of the cable ports 108, 109. In some implementations, the enclosure 103 may include a first input cable port 108 and multiple output cable ports 109. In still other implementations, the enclosure 103 may include a greater or lesser number of input cable ports 108 and/or output cable ports 109. In the example shown, the enclosure 103 defines six output ports 109. As used herein, the terms "input" and "output" are used for convenience and are not intended to be exclusory. Optical signals carried over optical fibers may travel in either or both directions. Accordingly, optical fibers routed through the input cable port assemblies may carry input and/or output signals.

In some implementations, at least one of the optical fibers routed into the enclosure 103 through the input cable port 108 is optically coupled to at least one of the optical fibers routed into the enclosure 103 through one of the output cable ports 109. For example, the optical fibers may be coupled together at the splice tray assembly 106 as will be disclosed in more detail herein. In certain implementations, one or more of the optical fibers also may be routed to a splitter disposed within the enclosure. Fibers output from the splitter may be routed to the splice tray assembly 106. Other optical fibers routed into the enclosure 103 through the input cable port 108 may be routed back out of the enclosure 103 through the port 108 (i.e., may form an unbroken loop within the enclosure 103). The optical cables may be coupled to port assemblies at the ports 109 to provide strain relief and/or pull-out strength. Examples port assemblies suitable for use with the splice enclosure assembly 100 are shown in U.S.

The sides 112, 113 of the base 101 are taller towards the first end 114 and shorter towards the second end 115 of the enclosure 103. The taller sides and first end 114 of the base 101 provide protection for the cable port assemblies when the cover 102 is removed from the base 101. The shorter sides and second end 115 of the base 101 facilitate access to the splice tray assembly 106 when the cover 102 is removed from the base 101. In certain implementations, the side walls of the base 101 remain short along a majority of the length of the splice tray assembly 106. In one implementation, the side walls of the base 101 remain short along the length of the splice tray assembly 106.

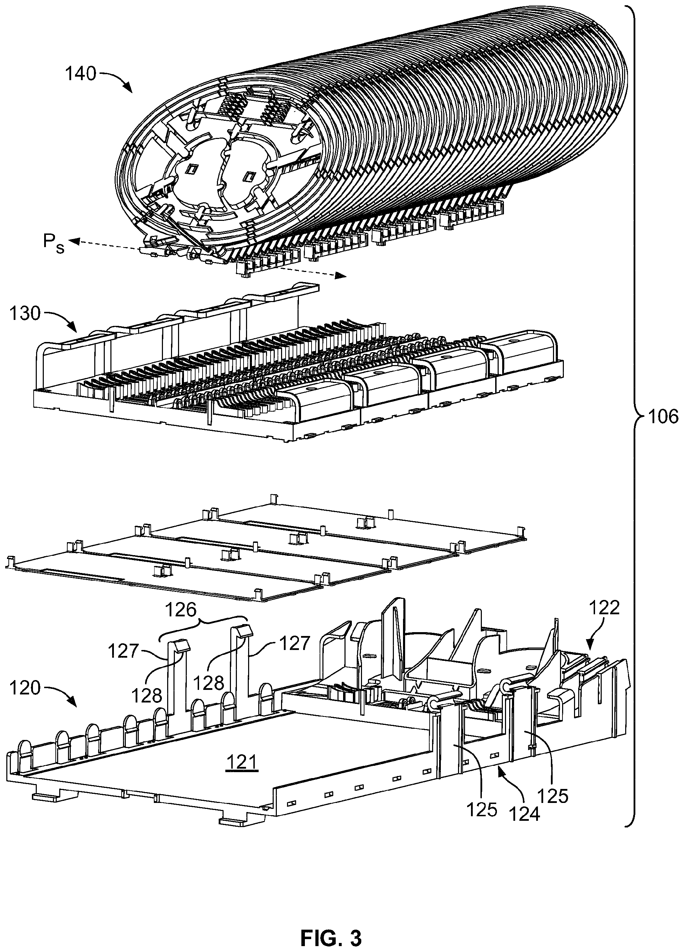

FIG. 3 illustrates an example implementation of the splice tray assembly 106 in isolation from the enclosure 103. The splice tray assembly 106 includes a tray manager 120 on which one or more groove plates 130 are disposed. Each groove plate 130 is configured to hold one or more splice trays 140. In certain implementations, the tray manager 120 also may be configured to hold one or more splice trays 140. In the example shown, the tray manager 120 is configured to hold two splice trays 140 and four groove plates 130. Each groove plate 130 in the illustrated embodiment holds nine splice trays 140. In other implementations, however, the tray manager 120 may hold a greater or lesser number of groove plates 130 and each groove plate 130 may hold a greater or lesser number of splice trays 140.

As shown in FIG. 3, the tray manager 120 includes side walls 122 extending upwardly from a bottom surface 121. The side walls 122 are configured to couple the groove plates 130 to the tray manager 120. The tray manager 120 also includes one or more retention arrangements 123 at which one or more first optical fibers may enter the tray manager 120. The retention arrangements 123 define channels through which optical fiber cables or fibers thereof pass. In certain implementations, the channels of the retention arrangements 123 are ramped downwardly towards the bottom surface 121 of the manager 120. The tray manager 120 and groove plates 130 hold the splice trays 140 so that each splice tray 140 has a pivot axis PS that extends between the first and second sides 112, 113 of the enclosure 103. The pivot axes PS of the splice trays 140 are parallel to each other when the splice trays 140 are mounted to the tray manager 120 and groove plates 130.

The splice trays 140 pivot between blocking and unblocking positions. In general, when in the blocking position, each splice tray 140 faces towards the second end of the enclosure 115. In certain implementations, each splice tray 140 faces partially towards the top 110 of the enclosure 103 when in the blocking position. When in the unblocking position, each splice tray 140 faces towards the bottom surface 121 of the tray manager 120. To access a select splice tray 140, all of the splice trays 140 located in front of the selected splice tray 140 (i.e., between the selected splice tray 140 and the second end 115 of the enclosure 103) are moved to the unblocking position and the selected splice tray 140 remains in the blocking position. Accordingly, no splice trays 140 will block access to the selected splice tray 140 and the front of the selected splice tray 140 faces partially upwardly.

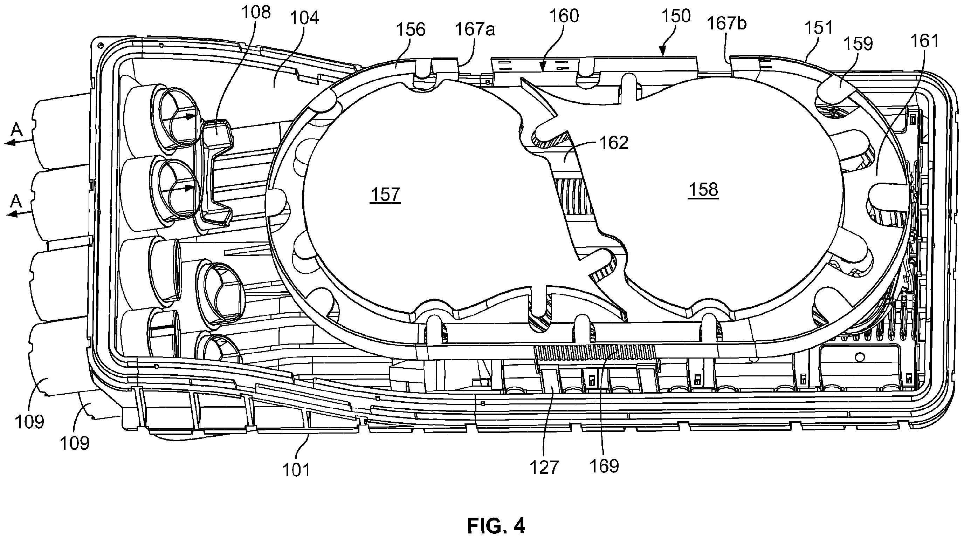

As shown in FIG. 4, a cable storage tray 150 is disposed within the enclosure 103 above the splice trays 140. The cable storage tray 150 includes a body 151 defining a storage channel arrangement 160. In some implementations, the storage channel arrangement 160 forms a looped channel. In some implementations, the storage channel arrangement 160 forms an S-shaped channel. In some implementations, the storage channel arrangement 160 forms a Figure-8 shaped channel. In other implementations, the storage channel arrangement 160 may have any other suitable shape that inhibits excessive bending of the optical fibers disposed in the tray 150.

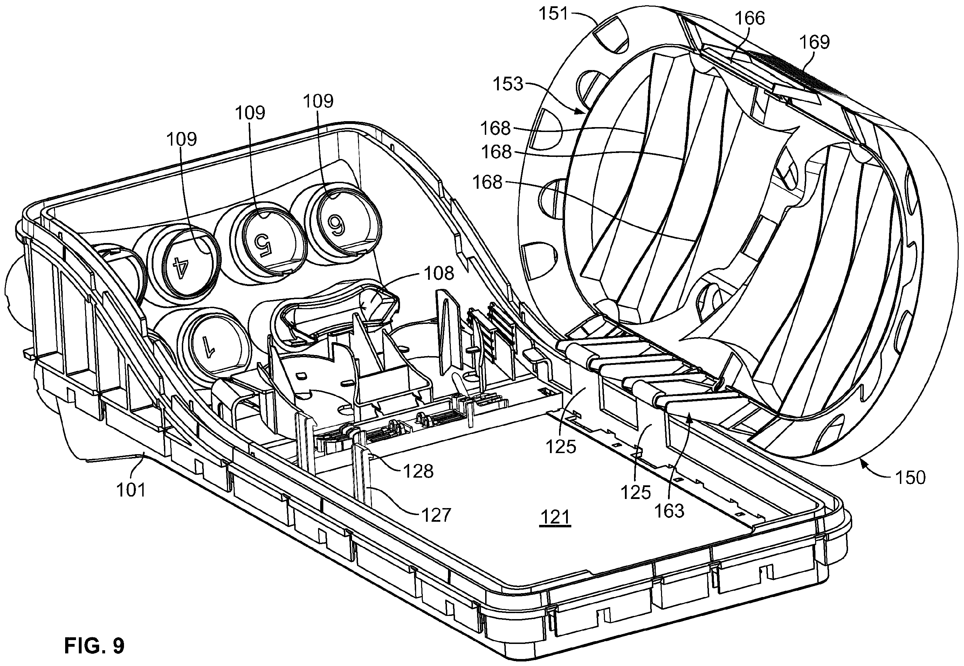

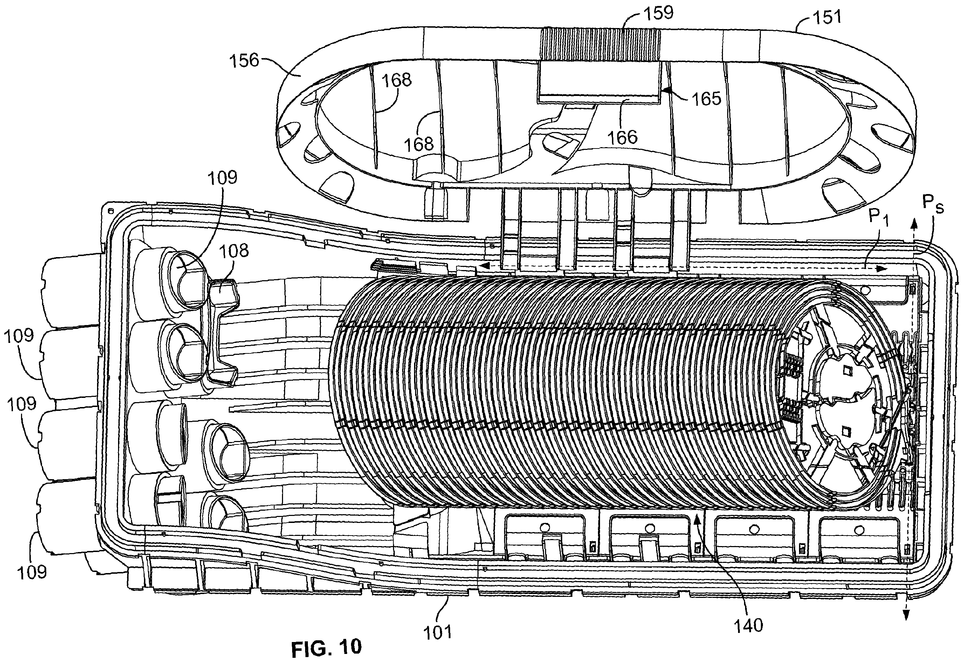

The tray body 151 pivots between a closed position covering the tops of the splice trays 140 (FIG. 4) and an open position exposing the splice trays 140 (FIG. 9). In the implementations according to the invention, the storage tray 150 pivots about a pivot axis PI that is not parallel to the pivot axes PS of the splice trays 140. In certain implementations, the storage tray 150 pivots about a pivot axis P1 that is generally perpendicular to the pivot axes PS of the splice trays 140 (see FIG. 10). In certain implementations, the storage tray 150 pivots about a pivot axis P1 that is generally parallel to the insertion axes A (FIG. 4) of the ports 108, 109. In other implementations not part of the invention, the pivot axis PI of the storage tray 150 is parallel to the pivot axes PS of the splice trays 140. In certain implementations, the tray body 151 is detachably mounted to the tray manager 120. For example, the tray body 151 may be configured to be removed from the enclosure 103 to facilitate loading of one or more optical fibers onto the tray body 151.

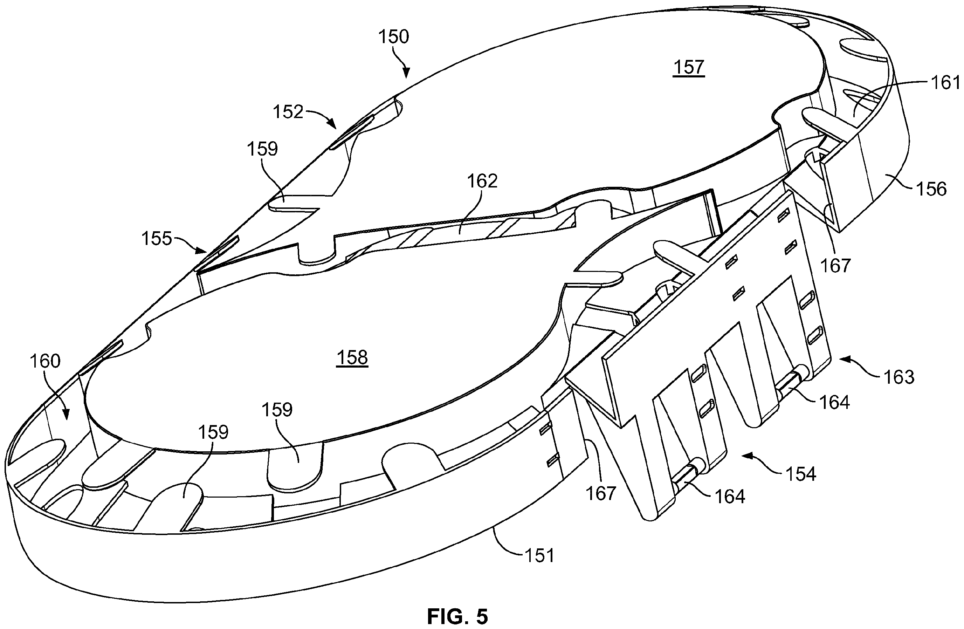

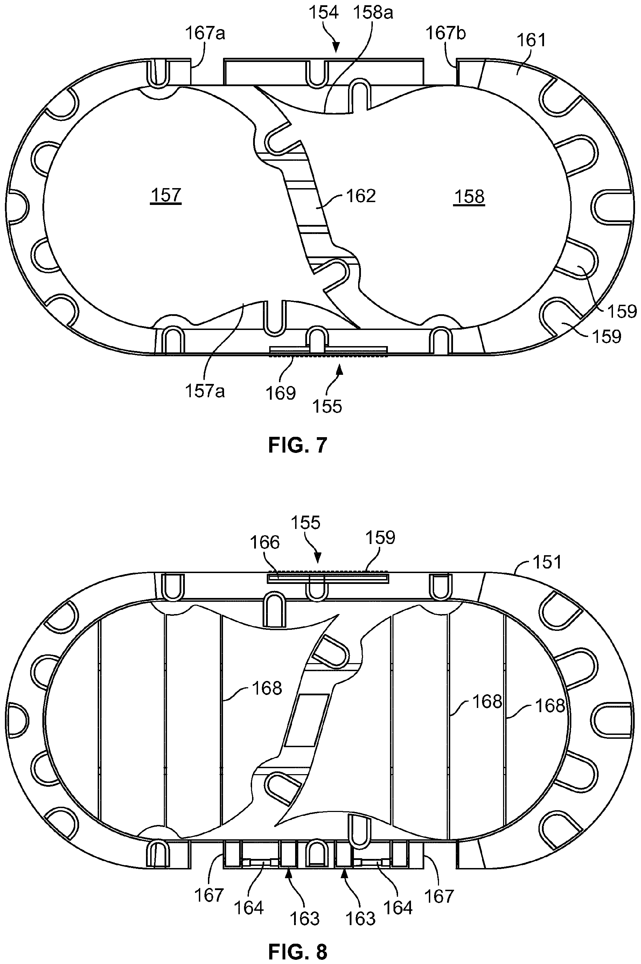

FIGS. 5-8 illustrate various views of one example storage tray 150. The tray body 151 has a first side 152 and an opposite second side 153. When the tray body 151 is mounted to the tray manager 120 in the closed position, the first side 152 of the body 151 faces away from the splice trays 140, and the second side 153 of the body 151 faces towards the splice trays 140. The tray body 151 also extends from a first end 154 to a second end 155 (see FIG. 7). In some implementations, the tray body 151 has an obround shape including generally flat ends 154, 155 and rounded sections connecting the flat ends 154, 155. In other implementations, the tray body 151 may be oblong, round, rectangular, or any other suitable shape.

The tray body 151 defines a cable storage channel arrangement 160 including an outer channel 161 and a crossing channel 162. The channel arrangement 160 is bounded partially by a peripheral sidewall 156 of the tray body 151. A first bend radius limiter 157 and a second bend radius limiter 158 further define the channel arrangement 160. The outer channel 161 is defined along an outer edge of the tray body 151 and wraps around both bend radius limiters 157, 158. In certain implementations, the bottom of the outer channel 161 angles towards the peripheral sidewall 156 (see FIG. 5). The crossing channel 162 extends between the first and second radius limiters 157, 158 to connect two sections of the outer channel 161 (see FIG. 7). Retaining tabs 159 extend over the channels 161, 162 from the sidewall 156 and radius limiters 157, 158 to aid in retaining optical fibers within the channel arrangement 160.

The tray sidewall 156 defines one or more apertures 167 through which optical fibers may enter and/or exit the channel arrangement 160. In the example shown, the tray sidewall 156 defines a first aperture 167a and a second aperture 167b spaced from the first aperture 167a. In certain implementations, the apertures 167 are located at the first end 154 of the tray body 151. In other implementations, the apertures 167 may be defined at different locations along the peripheral sidewall 156. In still other implementations, the apertures 167 may be defined through a bottom surface of the tray body 151.

In accordance with some aspects of the disclosure, the tray body 151 is pivotally mounted to the enclosure 103. For example, in certain implementations, the tray body 151 may be pivotally coupled to the tray manager 120. As shown in FIG. 5, a hinge arrangement 163 extends downwardly from the first end 154 of the tray body 151. In the example shown, the hinge arrangement 163 includes two hinge pins 164. In other implementations, the hinge arrangement 163 may include a greater or lesser number of hinge pins 164. The tray manager 120 includes a hinge arrangement 124 extending upwardly from the bottom surface 121 of the manger 120. In the example shown in FIG. 3, the hinge arrangement 124 includes two hinge members 125 that each define a retaining portion for receiving the hinge pins 164 of the storage tray 150. In other implementations, the hinge arrangement 124 may include a greater or lesser number of hinge members 125. In certain implementations, the hinge members 125 define open-slotted retaining portions to facilitate removal of the storage tray 150 from the tray manager 120. In other implementations, the base 101 includes the hinge arrangement 124 instead of the tray manager 120.

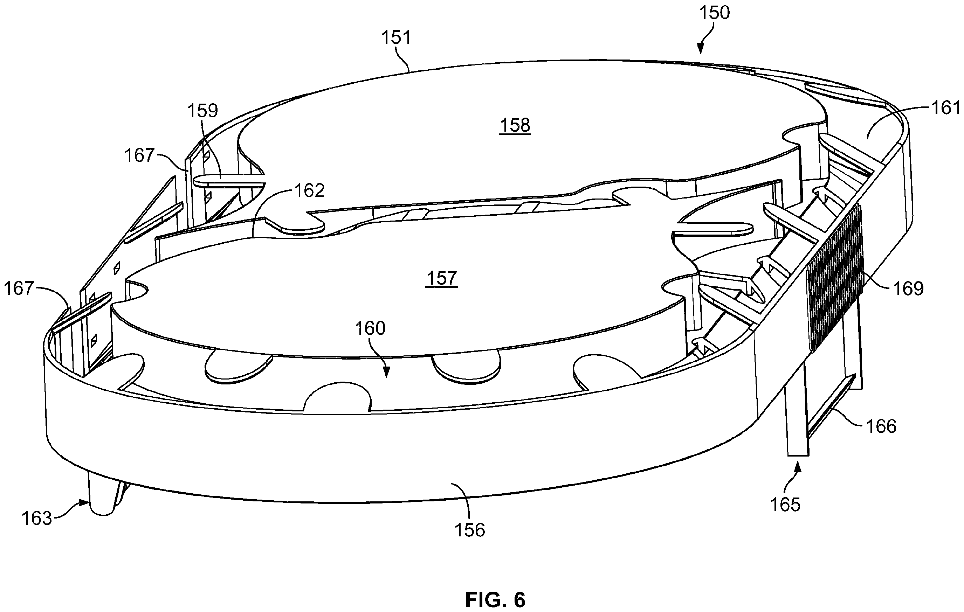

In some implementations, the storage tray 150 may be releasably locked in the closed position. For example, as shown in FIG. 6, certain types of tray bodies 151 include a latch arrangement 165 extending downwardly from the second end 155 of the tray body 151. In the example shown, the latch arrangement 165 includes a latch bar 166. In other implementations, the latch arrangement 165 may include multiple latch bars. The tray manager 120 also includes a latch arrangement 126 extending upwardly from the bottom surface 121 to engage the latch arrangement 165 of the storage tray 150. The latch arrangement 126 includes one or more flexible latch fingers 127 including latching tabs 128. In the example shown, the latch arrangement 126 includes two latch fingers 127. In still other implementations, the latch arrangement 165 may have latch fingers and the latch arrangement 126 may define a bar or shoulder. In still other implementations, the storage tray 150 may latch to the base 101 instead of the tray manager 120.

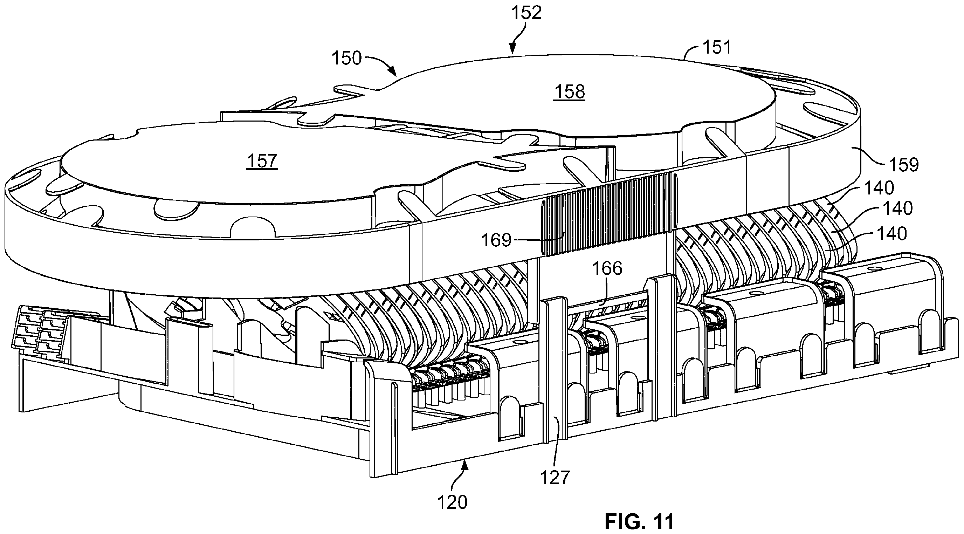

In certain implementations, the storage tray 150 includes a grip region 169 that facilitates movement of the tray 150 by a user. For example, in some implementations, an example grip region 169 may be provided on the peripheral sidewall 156 adjacent the latch arrangement 165 (see FIGS. 6 and 11). In other implementations, the grip region 169 may be provided elsewhere on the storage tray body 151. As shown in FIGS. 9 and 10, the storage tray 150 is shaped and configured to fit over the splice trays 140. For example, in certain implementations, the storage tray 150 includes ribs 168 contoured to accommodate the shape of the splice trays 140.

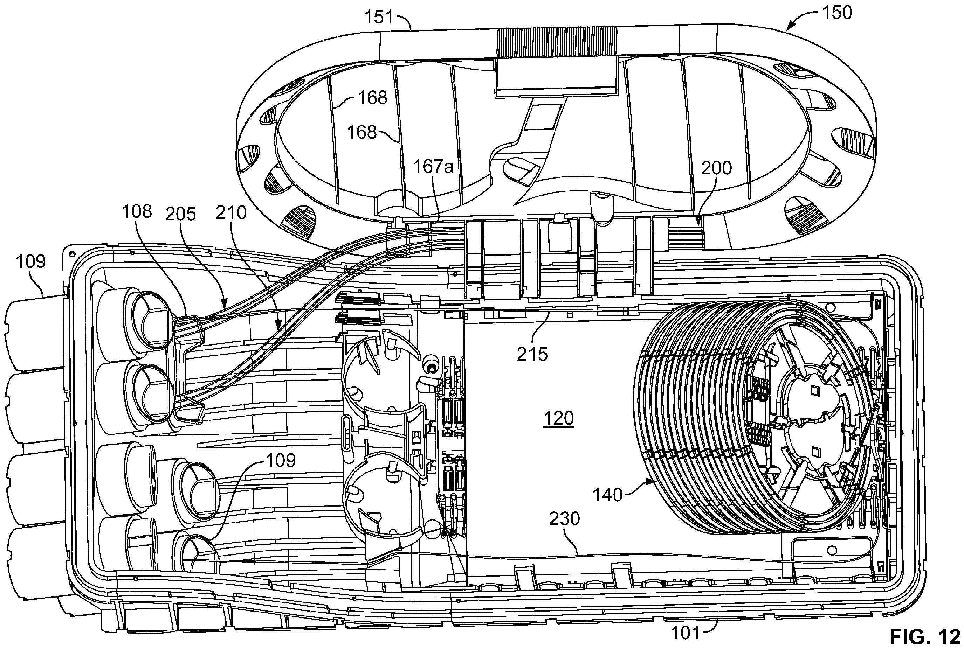

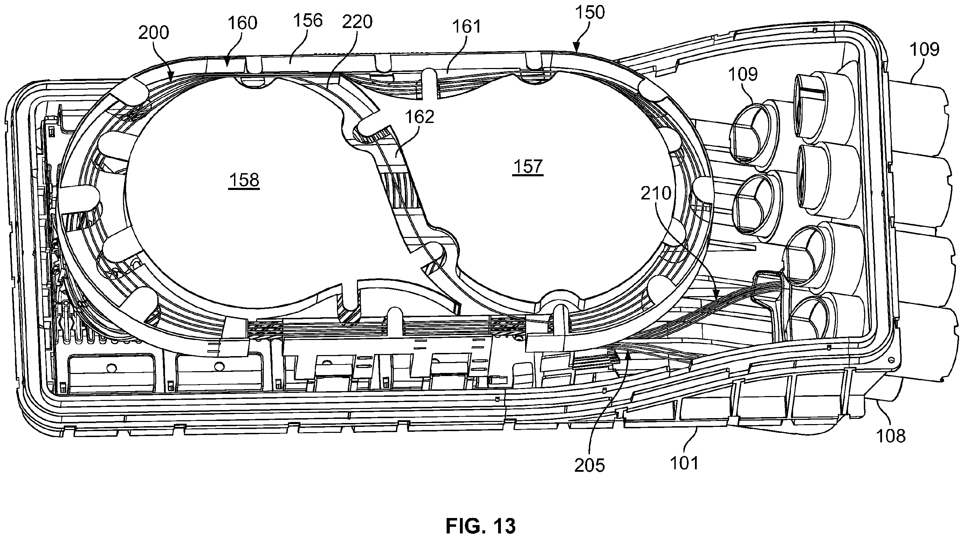

FIGS. 12 and 13 show a plurality of optical fibers 200 routed from the cable port 108 to the storage tray 150. In the example shown, the optical fibers 200 form part of an optical cable that is looped within the splice enclosure 103. One section 205 of the optical fibers enters the enclosure 103 at one end of the port 108 and another section 210 of the optical fibers exits the enclosure 103 at another end of the port 108. One or more of the optical fibers 200 of the first section 205 may be broken out and routed to the splice trays 140 for splicing to other optical fibers. For example, in FIG. 12, a first optical fiber 215 is broken out and routed to a fist splice tray 140. Another optical fiber 230 enters the enclosure 103 through one of the other ports 109 and is routed to the first splice tray 140 to be spliced to the broken out fiber 215.

The remaining fibers 200 extending inwardly from the cable port 108 are routed to the storage tray 150. In some implementations, both ends 205, 210 of the loop of fibers 200 enter the storage tray 150 through the first aperture 167a (see FIG. 12). In other implementations, one of the sections 205, 210 enters the storage tray 150 through the first aperture 167a and another of the sections 205, 210 enters the storage tray 150 through the second aperture 167b. In still other implementations, both sections 205, 210 enter the storage tray 150 through the second aperture 167b. As shown in FIG. 13, the optical fibers 200 of the looped section 220 are routed around the outer channel 161 to take up slack length. Finally, the looped section 220 of fibers 200 is routed around one of the bend radius limiters 157, 158 so that one side of the loop extends along outer channel 161 and the other side of the loop extends through the cross-over channel 162. In the example shown, the looped section 220 is routed around the first bend radius limiter 157.

In certain implementations, the peripheries of the bend radius limiters 157, 158 define scooped-out regions 157a, 158a, respectively, that border the outer channel 161. The scooped-out regions 157a, 158a accommodate variations in length of the optical fibers being routed onto the storage tray 150. For example, longer optical fibers may be curved into one or both the scooped-out regions 157a, 158a to take up the extra length when the fibers are routed around the storage tray 150.

In some implementations, the optical fibers 200 are routed within the storage channel arrangement 160 when the storage tray 150 is in the open position. In other implementations, however, the optical fibers 200 are routed within the storage channel arrangement 160 when the storage tray 150 is in the closed position. Advantageously, routing the optical fibers 200 through the channels 161, 162 when the tray 150 is closed may facilitate placing the optical fibers 200 into the channels 161, 162. For example, when the storage tray 150 is in the closed position, the hinge arrangement 163 and/or the latch arrangement 165 maintain the storage tray 150 in a stable position while a user maneuvers the optical fibers 200 around the retaining tabs 159 and/or packs multiple optical fibers 200 within the relatively narrow space of the channels 161, 162.

In some implementations, the section of optical fibers 200 disposed within the enclosure 103 has a length of about 1 meter to about 4 meters. In certain implementations, the section of optical fibers 200 disposed within the enclosure 103 has a length of about 2 meters to about 4 meters. In certain implementations, the section of optical fibers 200 disposed within the enclosure 103 has a length of about 3 meters to about 3.5 meters. In one example implementation, the section of optical fibers 200 disposed within the enclosure 103 has a length of about 3.2 meters. In one example implementation, the section of optical fibers 200 disposed within the enclosure 103 has a length of about 3.1 meters. In one example implementation, the section of optical fibers 200 disposed within the enclosure 103 has a length of about 3.3 meters.

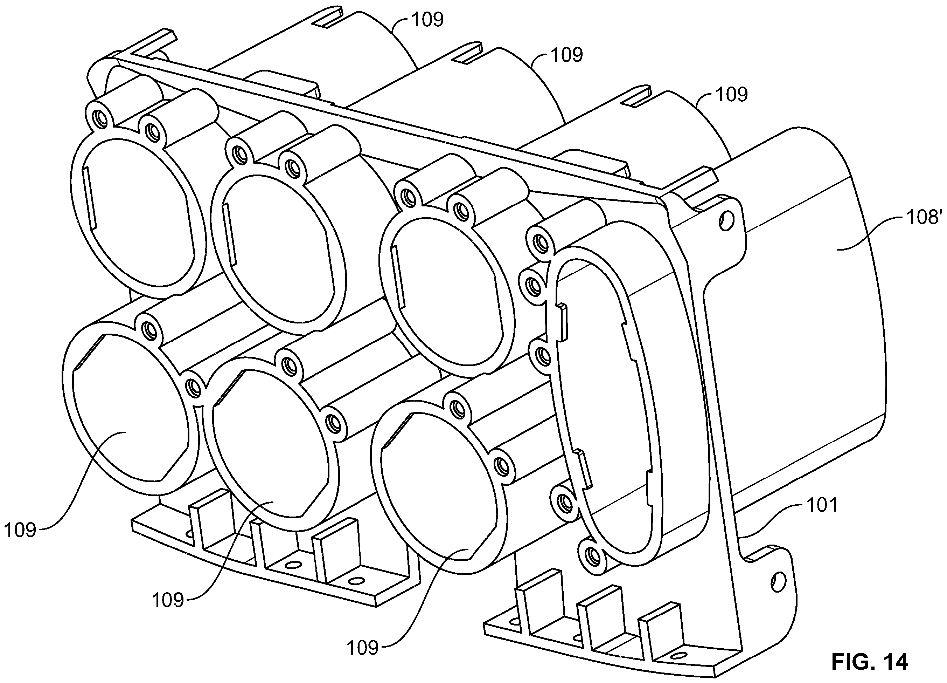

FIG. 14 shows an isolated view of the front of an alternative implementation of the base 101. The base 101 defines a plurality of ports 108', 109 that are similar to ports 108, 109 of the base 101 shown in FIGS. 1 and 9. However, the input port 108' of FIG. 14 is rotated about 90° relative to the input port 108 of FIGS. 1 and 9. The input port 108 of FIGS. 1 and 9 is elongated along a width of the enclosure (103) and the input port 108' of FIG. 14 is elongated along a height of the enclosure (103). The orientation of the input port 108' may aid in routing optical fibers 200 to the storage tray 150 from the port 108'. For example, the optical fibers 200 routed through the input port 108' will enter the enclosure 103 adjacent the sidewall of the enclosure 103. Accordingly, the optical fibers 200 routed to the storage tray 150 are less likely to cross-over optical fibers routed to/from the output ports 109.

### Parts List

- 100: a splice enclosure assembly
- 101: a base
- 102: a cover
- 103: an enclosure
- 104: an interior
- 105: latch arrangements
- 106: a splice tray assembly
- 108-109: cable ports
- 110: a top
- 111: a bottom
- 112: a first side
- 113: a second side
- 114: a first end
- 115: a second end
- 120: a tray manager
- 121: bottom surface
- 122: sidewalls
- 123: retention arrangements
- 124: hinge member arrangement
- 125: hinge member(s)
- 126: latch arrangement
- 127: latch finger(s)
- 128: latching tab(s)
- 130: groove plates
- 140: splice trays
- 150: storage tray
- 151: a body
- 152: a first side
- 153: a second side
- 154: a first end
- 155: a second end
- 156: a peripheral sidewall
- 157: a first bend radius limiter
- 157a: scooped-out region
- 158: a second bend radius limiter
- 158a: scooped-out region
- 159: retaining tabs
- 160: storage channel arrangement
- 161: outer channel
- 162: crossing channel
- 163: a hinge arrangement
- 164: hinge pin(s)
- 165: a latching arrangement
- 166: latching bar
- 167: entrance/exit aperture
- 167a: first aperture
- 167b: second aperture
- 168: contoured ribs
- 169: grip region
- PS: pivot axis of splice trays
- P1: pivot axis of storage tray
- 200: optical fibers
- 205: first section of fibers
- 210: second section of fibers
- 215: broken out fiber
- 220: looped section of fibers

## Claims

1. A splice enclosure assembly (100) comprising:
a base (101) defining an interior (104) and at least one cable port (108, 108', 109) leading to the interior (104) of the base (101);
a tray manager (120) disposed within the interior (104) of the base (101);
a plurality of splice trays (140) pivotally coupled to the tray manager (120) about parallel pivot axes (PS); and
a loop storage tray (150) disposed within the interior (104) over the splice trays (140), the loop storage tray (150) having a first side (152) and an opposite second side (153), when a tray body of the loop storage tray (150) is mounted to the tray manager (120) in a closed position, the first side (152) faces away from the splice trays (140) and the second side (153) faces towards the splice trays (140), the first side (152) of the loop storage tray (150) defining a cable storage channel arrangement (160) for cable slack storage, the cable storage channel arrangement (160) defining a round-about pathway for storing excess length of optical fibers and a pathway for a looped section of the optical fibers, the loop storage tray (150) being pivotally coupled to the tray manager (120) about a storage pivot axis (P1) that is not parallel to the pivot axes (PS) of the splice trays (140).

2. The splice enclosure assembly (100) of claim 1, wherein the pivot axis (P1) of the loop storage tray (150) extends generally perpendicular to the pivot axes (PS) of the splice trays (140).

3. The splice enclosure assembly (100) of any of the preceding claims, further comprising a cover (102) that mounts to the base (101) to close the interior (104), and wherein the loop storage tray (150) is located at a reduced height section of sidewalls of the base (101).

4. The splice enclosure assembly (100) of any of the preceding claims, the loop storage tray (150) including a hinge arrangement (163) extending downwardly from a first end (154) of the loop storage tray (150) and a latch arrangement (165) extending downwardly from a second end (155) of the loop storage tray (150).

5. The splice enclosure assembly (100) of claim 4, wherein the loop storage tray (150) defines at least one entrance/exit aperture (167) at the first end (154) of the loop storage tray (150).

6. The splice enclosure assembly (100) of claim 1, wherein the pivot axis (P1) of the loop storage tray (150) extends parallel to an insertion axis (A) of the at least one cable port (108, 108', 109).

7. The splice enclosure assembly (100) of any of the preceding claims, further comprising a first optical cable including a plurality of optical fibers (200), the optical fibers entering the base (101) through the at least one cable port (108, 108', 109), at least a first (220) of the optical fibers (200) being routed into the cable storage channel arrangement (160) of the loop storage tray (150), the first (220) of the optical fibers (200) extending unbroken between the at least one cable port (108, 108', 109), around the loop storage tray (150), and back to the at least one cable port (108, 108', 109).

8. The splice enclosure assembly (100) of claim 7, wherein at least a second (215) of the optical fibers (200) of the first optical cable is broken out from the first optical cable and routed to one of the splice trays (140).

9. The splice enclosure assembly (100) of claim 7, wherein the first optical cable exits the base (101) through the at least one cable port (108, 108', 109) so that a looped section (220) of the first optical cable is disposed within the enclosure interior (104).

10. The splice enclosure assembly (100) of claim 1, wherein the loop storage tray (150) includes:
a body (151) having a first side (152) and a second side (153) that extend between first and second ends (154, 155);
a first bend radius limiter (157) and a second bend radius limiter (158) disposed at the first side (152) of the body (151), the first and second bend radius limiters (157, 158) cooperating to define the cable storage channel arrangement (160), the cable storage channel arrangement (160) including an outer channel (161) and a crossing channel (162);
a hinge arrangement (163) extending from the first end (154) of the body (151); and
a latching arrangement (165) extending from a second end (155) of the body (151).

11. The splice enclosure assembly (100) of claim 10, wherein the body (151) includes a peripheral sidewall (156) and wherein the outer channel (161) of the cable storage channel arrangement (160) includes a bottom that is angled towards the peripheral sidewall (156), and wherein the peripheral sidewall (156) defines at least one entrance/exit aperture (167, 167a, 167b) at the first end (154) of the loop storage tray (150).

12. The splice enclosure assembly (100) of claim 11, wherein the latching arrangement (165) includes a latching bar (166) having an angled shoulder, and wherein the second end (155) of the body (151) includes a grip surface (169) extending along a length of the latching bar (166).

13. The splice enclosure assembly (100) of claim 1, wherein the cable storage channel arrangement (160) includes an outer channel (161) and a crossing channel (162), the outer channel (161) is defined along an outer edge of the loop storage tray (150) and wraps around a first bend radius limiter (157) and a second bend radius limiter (158), the crossing channel (162) extends between the two bend radius limiters (157, 158) to connect two sections of the outer channel (161).

14. The splice enclosure assembly (100) of claim 13, wherein a bottom of the outer channel (161) angles towards a peripheral sidewall (156) of the loop storage tray (150) that bounds the channel arrangement (160).

15. A method of splicing a first optical fiber (215) of a first fiber optic cable to another optical fiber (230) at the splice enclosure assembly (100) of claim 1, the method comprising:
disposing a section (220) of the first fiber optic cable within the splice enclosure (100), wherein portions (205, 210) of the first fiber optic cable on either side of the section (220) extend through the cable port (108, 108'), wherein the section (220) of the first fiber optic cable includes a stripped region of the first fiber optic cable;
pivoting the loop storage tray (150) to an open position to provide access to the plurality of splice trays (140) disposed in the splice enclosure assembly (100);
accessing one of the plurality of splice trays (140);
breaking out at least one optical fiber (215) from the first fiber optic cable and routing the at least one optical fiber (215) to the accessed splice tray (140);
pivoting the loop storage tray (150) to a closed position that inhibits access to the splice trays (140); and
storing any remaining optical fibers (200) of the first fiber optic cable in the cable storage channel arrangement (160) of the loop storage tray (150).

## Patentansprüche

1. Spleißgehäuseanordnung (100), umfassend:
eine Basis (101), die einen Innenraum (104) und mindestens eine Kabelöffnung (108, 108', 109) definiert, die zum Innenraum (104) der Basis (101) führt;
einen Ablagenmanager (120), der im Innenraum (104) der Basis (101) angeordnet ist;
eine Vielzahl von Spleißablagen (140), die um parallele Schwenkachsen (PS) schwenkbar mit dem Ablagenmanager (120) gekoppelt sind; und
eine Schlaufenlagerungsablage (150), die im Innenraum (104) über den Spleißablagen (140) angeordnet ist, wobei die Schlaufenlagerungsablage (150) eine erste Seite (152) und eine gegenüberliegende zweite Seite (153) aufweist, wobei, wenn ein Ablagekörper der Schlaufenlagerungsablage (150) am Ablagemanager (120) in einer geschlossenen Stellung montiert ist, die erste Seite (152) von den Spleißablagen (140) weg weist und die zweite Seite (153) zu den Spleißablagen (140) hin weist, wobei die erste Seite (152) der Schlaufenlagerungsablage (150) eine Kabellagerungskanalanordnung (160) zur Lagerung von Kabelschlupf definiert, wobei die Kabellagerungskanalanordnung (160) einen umlaufenden Pfad zum Aufnehmen überschüssiger Länge von Glasfasern und einen Pfad für einen Schlaufenabschnitt der Glasfasern definiert, wobei die Schlaufenlagerungsablage (150) schwenkbar mit dem Ablagemanager (120) um eine Lagerungsschwenkachse (PI) gekoppelt ist, die nicht parallel zu den Schwenkachsen (PS) der Spleißablagen (140) ist.

2. Spleißgehäuseanordnung (100) gemäß Anspruch 1, wobei sich die Schwenkachse (P1) der Schlaufenlagerungsablage (150) im Allgemeinen rechtwinklig zu den Schwenkachsen (PS) der Spleißablagen (140) erstreckt.

3. Spleißgehäuseanordnung (100) gemäß einem der vorhergehenden Ansprüche, ferner umfassend eine Abdeckung (102), die an der Basis (101) befestigt ist, um den Innenraum (104) zu verschließen, und wobei sich die Schlaufenlagerungsablage (150) an einem Abschnitt der Seitenwände der Basis (101) mit reduzierter Höhe befindet.

4. Spleißgehäuseanordnung (100) gemäß einem der vorhergehenden Ansprüche, wobei die Schlaufenlagerungsablage (150) eine Scharnieranordnung (163), die sich von einem ersten Ende (154) der Schlaufenlagerungsablage (150) nach unten erstreckt, und eine Verriegelungsanordnung (165) aufweist, die sich von einem zweiten Ende (155) der Schlaufenlagerungsablage (150) nach unten erstreckt.

5. Spleißgehäuseanordnung (100) gemäß Anspruch 4, wobei die Schlaufenlagerungsablage (150) mindestens eine Eingangs-/Ausgangsöffnung (167) am ersten Ende (154) der Schlaufenlagerungsablage (150) definiert.

6. Spleißgehäuseanordnung (100) gemäß Anspruch 1, wobei sich die Schwenkachse (P1) der Schlaufenlagerungsablage (150) parallel zu einer Einführachse (A) der mindestens einen Kabelöffnung (108, 108', 109) erstreckt.

7. Spleißgehäuseanordnung (100) gemäß einem der vorhergehenden Ansprüche, ferner umfassend ein erstes Glasfaserkabel, das eine Vielzahl von Glasfasern (200) aufweist, wobei die Glasfasern durch die mindestens eine Kabelöffnung (108, 108', 109) in die Basis (101) eintreten, wobei mindestens eine erste (220) der Glasfasern (200) in die Kabellagerungskanalanordnung (160) der Schlaufenlagerungsablage (150) geführt wird, wobei sich die erste (220) der Glasfasern (200) ungebrochen zwischen der mindestens einen Kabelöffnung (108, 108', 109), um die Schlaufenlagerungsablage (150) herum und zurück zu der mindestens einen Kabelöffnung (108, 108', 109) erstreckt.

8. Spleißgehäuseanordnung (100) gemäß Anspruch 7, wobei mindestens eine zweite (215) der Glasfasern (200) des ersten Glasfaserkabels aus dem ersten Glasfaserkabel herausgebrochen und zu einer der Spleißablagen (140) geführt wird.

9. Spleißgehäuseanordnung (100) gemäß Anspruch 7, wobei das erste Glasfaserkabel die Basis (101) durch die mindestens eine Kabelöffnung (108, 108', 109) verlässt, sodass ein Schlaufenabschnitt (220) des ersten Glasfaserkabels innerhalb des Gehäuseinnenraums (104) angeordnet ist.

10. Spleißgehäuseanordnung (100) gemäß Anspruch 1, wobei die Schlaufenlagerungsablage (150) aufweist:
einen Körper (151), der eine erste Seite (152) und eine zweite Seite (153) aufweist, die sich zwischen dem ersten und dem zweiten Ende (154, 155) erstrecken;
einen ersten Biegeradiusbegrenzer (157) und einen zweiten Biegeradiusbegrenzer (158), die an der ersten Seite (152) des Körpers (151) angeordnet sind, wobei der erste und der zweite Biegeradiusbegrenzer (157, 158) zusammenwirken, um die Kabellagerungskanalanordnung (160) zu definieren, wobei die Kabellagerungskanalanordnung einen Außenkanal (161) und einen Kreuzungskanal (162) aufweist;
eine Scharnieranordnung (163), die sich von dem ersten Ende (154) des Körpers (151) erstreckt; und
eine Verriegelungsanordnung (165), die sich von einem zweiten Ende (155) des Körpers (151) aus erstreckt.

11. Spleißgehäuseanordnung (100) gemäß Anspruch 10, wobei der Körper (151) eine periphere Seitenwand (156) aufweist und wobei der Außenkanal (161) der Kabellagerungskanalanordnung (160) einen Boden aufweist, der zur peripheren Seitenwand (156) hin abgewinkelt ist, und wobei die periphere Seitenwand (156) mindestens eine Eingangs-/Ausgangsöffnung (167, 167a, 167b) am ersten Ende (154) der Schlaufenlagerungsablage (150) definiert.

12. Spleißgehäuseanordnung (100) gemäß Anspruch 11, wobei die Verriegelungsanordnung (165) eine Verriegelungsstange (166) mit einer abgewinkelten Schulter aufweist, und wobei das zweite Ende (155) des Körpers (151) eine Grifffläche (169) aufweist, die sich entlang einer Länge der Verriegelungsstange (166) erstreckt.

13. Spleißgehäuseanordnung (100) gemäß Anspruch 1, wobei die Kabellagerungskanalanordnung (160) einen Außenkanal (161) und einen Kreuzungskanal (162) aufweist, der Außenkanal (161) entlang einer Außenkante der Schlaufenlagerungsablage (150) definiert ist und sich um einen ersten Biegeradiusbegrenzer (157) und einen zweiten Biegeradiusbegrenzer (158) windet, der Kreuzungskanal (162) sich zwischen den beiden Biegeradiusbegrenzern (157, 158) erstreckt, um zwei Abschnitte des Außenkanals (161) zu verbinden.

14. Spleißgehäuseanordnung (100) gemäß Anspruch 13, wobei ein Boden des Außenkanals (161) in einem Winkel zu einer peripheren Seitenwand (156) der Schlaufenlagerungsablage (150) verläuft, die die Kanalanordnung (160) begrenzt.

15. Verfahren zum Spleißen einer ersten Glasfaser (215) eines ersten Glasfaserkabels mit einer anderen Glasfaser (230) an der Spleißgehäuseanordnung (100) gemäß Anspruch 1, wobei das Verfahren umfasst:
Anordnen eines Abschnitts (220) des ersten Glasfaserkabels innerhalb des Spleißgehäuses (100), wobei Teile (205, 210) des ersten Glasfaserkabels auf beiden Seiten des Abschnitts (220) durch die Kabelöffnung (108, 108') verlaufen, wobei der Abschnitt (220) des ersten Glasfaserkabels einen abisolierten Bereich des ersten Glasfaserkabels aufweist;
Schwenken der Schlaufenlagerungsablage (150) in eine offene Stellung, um Zugang zu der Vielzahl von Spleißablagen (140), die in der Spleißgehäuseanordnung (100) angeordnet sind, zu erhalten;
Zugreifen auf eine der Vielzahl von Spleißablagen (140) ;
Ausbrechen mindestens einer Glasfaser (215) aus dem ersten Glasfaserkabel und Führen der mindestens einen Glasfaser (215) zu der zugegriffenen Spleißablage (140);
Schwenken der Schlaufenlagerungsablage (150) in eine geschlossene Stellung, die den Zugriff auf die Spleißablagen (140) verhindert; und
Lagern von verbleibenden Glasfasern (200) des ersten Glasfaserkabels in der Kabellagerungskanalanordnung (160) der Schlaufenlagerungsablage (150).

## Revendications

1. Ensemble boîtier d'épissure (100) comprenant :
un socle (101) définissant un intérieur (104) et au moins un orifice pour câble (108, 108', 109) conduisant à l'intérieur (104) du socle (101) ;
un gestionnaire de plateaux (120) disposé dans l'intérieur (104) du socle (101) ;
une pluralité de plateaux d'épissure (140) couplés avec faculté de pivotement au gestionnaire de plateaux (120) autour d'axes pivots parallèles (PS) ; et
un plateau de stockage de boucle (150) disposé dans l'intérieur (104) par-dessus les plateaux d'épissure (140), le plateau de stockage de boucle (150) ayant un premier côté (152) et un deuxième côté opposé (153), quand un corps de plateau du plateau de stockage de boucle (150) est monté sur le gestionnaire de plateaux (120) dans une position fermée, le premier côté (152) tourne le dos aux plateaux d'épissure (140) et le deuxième côté (153) fait face aux plateaux d'épissure (140), le premier côté (152) du plateau de stockage de boucle (150) définissant un agencement de canal de stockage de câble (160) pour le stockage de jeu de câble, l'agencement de canal de stockage de câble (160) définissant un passage en rond-point destiné à stocker une longueur en excès de fibres optiques et un passage pour une section en boucle des fibres optiques, le plateau de stockage de boucle (150) étant couplé avec faculté de pivotement au gestionnaire de plateaux (120) autour d'un axe pivot de stockage (P1) qui n'est pas parallèle aux axes pivots (PS) des plateaux d'épissure (140) .

2. Ensemble boîtier d'épissure (100) de la revendication 1, dans lequel l'axe pivot (P1) du plateau de stockage de boucle (150) s'étend généralement perpendiculairement aux axes pivots (PS) des plateaux d'épissure (140).

3. Ensemble boîtier d'épissure (100) de l'une quelconque des revendications précédentes, comprenant en outre un couvercle (102) qui se monte sur le socle (101) pour fermer l'intérieur (104), et dans lequel le plateau de stockage de boucle (150) est situé au niveau d'une section de hauteur réduite de parois latérales du socle (101) .

4. Ensemble boîtier d'épissure (100) de l'une quelconque des revendications précédentes, le plateau de stockage de boucle (150) comportant un agencement de charnière (163) s'étendant vers le bas depuis une première extrémité (154) du plateau de stockage de boucle (150) et un agencement de verrou (165) s'étendant vers le bas depuis une deuxième extrémité (155) du plateau de stockage de boucle (150).

5. Ensemble boîtier d'épissure (100) de la revendication 4, dans lequel le plateau de stockage de boucle (150) définit au moins une ouverture d'entrée/sortie (167) à la première extrémité (154) du plateau de stockage de boucle (150).

6. Ensemble boîtier d'épissure (100) de la revendication 1, dans lequel l'axe pivot (P1) du plateau de stockage de boucle (150) s'étend parallèlement à un axe d'insertion (A) de l'au moins un orifice pour câble (108, 108', 109).

7. Ensemble boîtier d'épissure (100) de l'une quelconque des revendications précédentes, comprenant en outre un premier câble optique comportant une pluralité de fibres optiques (200), les fibres optiques pénétrant dans le socle (101) par l'au moins un orifice pour câble (108, 108', 109), au moins une première (220) des fibres optiques (200) étant acheminée à l'intérieur de l'agencement de canal de stockage de câble (160) du plateau de stockage de boucle (150), la première (220) des fibres optiques (200) s'étendant intacte entre l'au moins un orifice pour câble (108, 108', 109), autour du plateau de stockage de boucle (150), et de nouveau jusqu'à l'au moins un orifice pour câble (108, 108', 109).

8. Ensemble boîtier d'épissure (100) de la revendication 7, dans lequel au moins une deuxième (215) des fibres optiques (200) du premier câble optique est séparée du premier câble optique et acheminée jusqu'à un des plateaux d'épissure (140).

9. Ensemble boîtier d'épissure (100) de la revendication 7, dans lequel le premier câble optique sort du socle (101) par l'au moins un orifice pour câble (108, 108', 109) de telle sorte qu'une section en boucle (220) du premier câble optique est disposée dans l'intérieur (104) du boîtier.

10. Ensemble boîtier d'épissure (100) de la revendication 1, dans lequel le plateau de stockage de boucle (150) comporte :
un corps (151) ayant un premier côté (152) et un deuxième côté (153) qui s'étendent entre des première et deuxième extrémités (154, 155) ;
un premier limiteur de rayon de pliage (157) et un deuxième limiteur de rayon de pliage (158) disposés sur le premier côté (152) du corps (151), les premier et deuxième limiteurs de rayon de pliage (157, 158) coopérant pour définir l'agencement de canal de stockage de câble (160), l'agencement de canal de stockage de câble comportant un canal externe (161) et un canal de croisement (162) ;
un agencement de charnière (163) s'étendant depuis la première extrémité (154) du corps (151) ; et
un agencement de verrou (165) s'étendant depuis une deuxième extrémité (155) du corps (151).

11. Ensemble boîtier d'épissure (100) de la revendication 10, dans lequel le corps (151) comporte une paroi latérale périphérique (156), et dans lequel le canal externe (161) de l'agencement de canal de stockage de câble (160) comporte un fond qui est incliné vers la paroi latérale périphérique (156), et dans lequel la paroi latérale périphérique (156) définit au moins une ouverture d'entrée/sortie (167, 167a, 167b) à la première extrémité (154) du plateau de stockage de boucle (150).

12. Ensemble boîtier d'épissure (100) de la revendication 11, dans lequel l'agencement de verrou (165) comporte une barre de verrouillage (166) ayant un épaulement incliné, et dans lequel la deuxième extrémité (155) du corps (151) comporte une surface de préhension (169) s'étendant le long d'une longueur de la barre de verrouillage (166).

13. Ensemble boîtier d'épissure (100) de la revendication 1, dans lequel l'agencement de canal de stockage de câble (160) comporte un canal externe (161) et un canal de croisement (162), le canal externe (161) est défini le long d'un bord externe du plateau de stockage de boucle (150) et s'enroule autour d'un premier limiteur de rayon de pliage (157) et d'un deuxième limiteur de rayon de pliage (158), le canal de croisement (162) s'étend entre les deux limiteurs de rayon de pliage (157, 158) pour relier deux sections du canal externe (161).

14. Ensemble boîtier d'épissure (100) de la revendication 13, dans lequel un fond du canal externe (161) s'incline vers une paroi latérale périphérique (156) du plateau de stockage de boucle (150) qui délimite l'agencement de canal (160).

15. Procédé d'épissure d'une première fibre optique (215) d'un premier câble à fibres optiques avec une autre fibre optique (230) au niveau de l'ensemble boîtier d'épissure (100) de la revendication 1, le procédé comprenant :
la mise en place d'une section (220) du premier câble à fibres optiques à l'intérieur du boîtier d'épissure (100), des parties (205, 210) du premier câble à fibres optiques sur chaque côté de la section (220) s'étendant à travers l'orifice pour câble (108, 108'), la section (220) du premier câble à fibres optiques comportant une région dénudée du premier câble à fibres optiques ;
le pivotement du plateau de stockage de boucle (150) jusqu'à une position ouverte pour donner accès à la pluralité de plateaux d'épissure (140) disposés dans l'ensemble boîtier d'épissure (100) ;
l'accès à l'un de la pluralité de plateaux d'épissure (140) ;
la séparation d'au moins une fibre optique (215) du premier câble à fibres optiques et l'acheminement de l'au moins une fibre optique (215) jusqu'au plateau d'épissure accessible (140) ;
le pivotement du plateau de stockage de boucle (150) jusqu'à une position fermée qui empêche l'accès aux plateaux d'épissure (140) ; et
le stockage de toutes les fibres optiques restantes (200) du premier câble à fibres optiques dans l'agencement de canal de stockage de câble (160) du plateau de stockage de boucle (150).
